# EUROPEAN PATENT APPLICATION

(11) **EP 3 428 022 A1**
(43) Date of publication of application: **16.01.2019**
(21) Application number: 18182977.1
(22) Date of filing: 11.07.2018
(51) Int. Cl.: B60T 8/32, B64C 25/44

(54) **BRAKE HANDLE FOR EMERGENCY ELECTRIC BRAKING**

(30) Priority: 11.07.2017 US 201715647079
(71) Applicant: Goodrich Corporation, Charlotte, NC 28217-4578 (US)
(72) Inventor: KORDIK, Michael, Dayton, OH 45419 (US); GEORGIN, Marc, Dayton, OH 45419 (US)
(74) Representative: Dehns

(57) **Abstract**

A brake handle for emergency braking in an emergency electric brake system is disclosed. The emergency electric brake system may comprise a brake control unit (BCU), (110) an electric braking actuating controller (EBAC) (120), and one or more electromechanical brake actuators (EBA) (132). The brake handle may be in direct electronic communication with the EBAC to allow an independent emergency braking input to the EBAC, thus bypassing the BCU in the event of an emergency braking situation.

## Description

### FIELD

The present disclosure relates to aircraft parking brakes, and more specifically, to a brake handle for emergency braking in electric braking systems.

### BACKGROUND

Aircraft typically have brakes on the wheels to slow the aircraft during landing, rejected takeoffs, and taxiing. Failures may occur in the brakes, the brake control systems, brake pedal sensors, and/or the like, causing compromised brake control, un-commanded braking, and/or similar failure events. In electric braking, a brake control unit (BCU) is coupled to one or more electric braking actuating controllers (EBAC) which drives one or more electromechanical brake actuators (EBA) to generate braking force. Because there is no independent path to control the EBAC apart from the BCU, the BCU and the EBAC may need increased design and safety assurances to meet aircraft safety guidelines, thus increasing costs associated with the BCU and EBAC.

### SUMMARY

In various embodiments, an emergency electric brake system for an aircraft is disclosed. The emergency electric brake system may comprise a brake handle configured to generate a displacement distance data related to a displacement of the brake handle; and an electric braking actuating controller (EBAC) in direct electronic communication with the brake handle, wherein in response to receiving the displacement distance data from the brake handle, the EBAC is configured to generate an emergency brake signal comprising a specified brake force.

In various embodiments, the emergency electric brake system may further comprise an electromechanical brake actuator (EBA) in electronic communication with the EBAC. In response to receiving the emergency brake signal from the EBAC, the EBA may be configured to apply a braking force in an aircraft brake based on the specified brake force. The brake handle may comprise a displacement sensor configured to detect and measure the displacement of the brake handle. The displacement sensor may comprise at least one of a linear variable differential transformer (LVDT) sensor or a rotary variable differential transformer (RVDT) sensor. The emergency brake signal may comprise a variable emergency brake signal or a single emergency brake signal. The emergency electric brake system may further comprise a brake control unit (BCU) in electronic communication with the EBAC, wherein the BCU is configured to transmit a braking command to the EBAC. The EBAC may comprise a braking logic configured to determine a brake signal to use in response to receiving the displacement distance data and the braking command.

In various embodiments, a method of emergency electric braking is disclosed. The method may comprise receiving, by an electric braking actuating controller (EBAC), a displacement distance data related to a displacement of a brake handle; generating, by the EBAC, an emergency brake signal based on the displacement distance data; and transmitting, by the EBAC, the emergency brake signal to control a braking force in an aircraft brake.

In various embodiments, the EBAC may be configured to transmit the emergency brake signal to an electromechanical brake actuator (EBA) in electronic communication with the EBAC. In response to receiving the emergency brake signal from the EBAC, the EBA may be configured to apply the braking force in the aircraft brake. The brake handle may comprise a displacement sensor configured to detect and measure the displacement of the brake handle. The displacement sensor may comprise at least one of a linear variable differential transformer (LVDT) sensor or a rotary variable differential transformer (RVDT) sensor. The method may further comprise applying the braking force to an aircraft wheel based on the emergency brake signal.

In various embodiments, an emergency electric brake system is disclosed. The emergency electric brake system may comprise an electric braking actuating controller (EBAC) having a processor; and a tangible, non-transitory memory configured to communicate with the processor, the tangible, non-transitory memory having instructions stored thereon that, in response to execution by the processor, cause the EBAC to perform operations comprising: receiving, by the EBAC, a displacement distance data related to a displacement of a brake handle; generating, by the EBAC, an emergency brake signal based on the displacement distance data; and transmitting, by the EBAC, the emergency brake signal to control a braking force in an aircraft brake.

In various embodiments, the EBAC may be configured to transmit the emergency brake signal to an electromechanical brake actuator (EBA) in electronic communication with EBAC. In response to receiving the emergency brake signal from the EBAC, the EBA may be configured to apply the braking force in the aircraft brake. The brake handle may comprise a displacement sensor configured to detect and measure the displacement of the brake handle. The displacement sensor may comprise at least one of a linear variable differential transformer (LVDT) sensor or a rotary variable differential transformer (RVDT) sensor. The emergency brake signal may comprise a variable emergency brake signal or a single emergency brake signal.

The forgoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates an exemplary aircraft having an emergency electric brake system, in accordance with various embodiments;
FIG. 2A illustrates a schematic view of an emergency electric brake system, in accordance with various embodiments;
FIG. 2B illustrates a schematic view of a brake handle and an electric braking actuating controller (EBAC) for an emergency electric brake system, in accordance with various embodiments; and
FIG. 3 illustrates a process flow for a method of emergency electric braking, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

Aircraft wheel and brake assemblies may include a non-rotatable wheel support, a wheel mounted to the wheel support for rotation, and a brake disk stack. The brake stack may also have alternating rotor and stator disks mounted with respect to the wheel support and wheel for relative axial movement. Each rotor disk may be coupled to the wheel for rotation therewith, and each stator disk may be coupled to the wheel support against rotation. A back plate may be located at the rear end of the disk pack and a brake head may be located at the front end. The brake head may house one or more actuator rams that extend to compress the brake disk stack against the back plate, or the brake disk stack may be compressed by other means. Torque is taken out by the stator disks through a static torque tube or the like. The actuator rams may be electrically operated actuator rams or hydraulically operated actuator rams, although some brakes may use pneumatically operated actuator rams.

In electronic brake systems, a brake control unit (or controller) is coupled to one or more electric braking actuating controllers (EBAC) which drives one or more electromechanical brake actuators (EBA). The brake control unit may be in communication with a brake pedal, and thus may control the EBAC in accordance with pilot/copilot braking commands. In various aircraft, other means are used to compress a brake disk stack. A brake control unit may comprise a processor and a tangible, non-transitory memory. The brake control unit may comprise one or more logic modules that implement brake logic. In various embodiments, the brake control unit may comprise other electrical devices to implement brake logic.

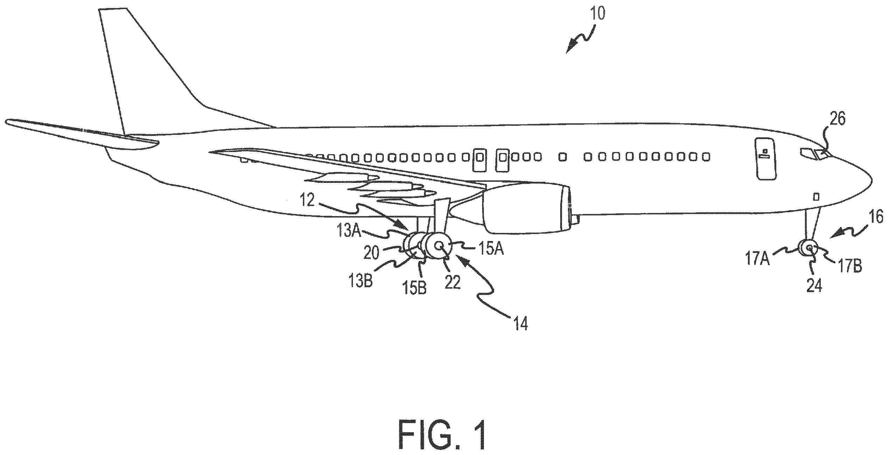

Referring now to FIG. 1, in accordance with various embodiments, an aircraft 10 may include landing gear such as left main landing gear 12, right main landing gear 14 and nose landing gear 16. Left main landing gear 12, right main landing gear 14, and nose landing gear 16 may generally support aircraft 10 when aircraft 10 is not flying, allowing aircraft 10 to taxi, take off and land without damage. Left main landing gear 12 may include wheel 13A and wheel 13B coupled by an axle 20. Right main landing gear 14 may include wheel 15A and wheel 15B coupled by an axle 22. Nose landing gear 16 may include nose wheel 17A and nose wheel 17B coupled by an axle 24. In various embodiments, aircraft 10 may comprise any number of landing gears and each landing gear may comprise any number of wheels. Left main landing gear 12, right main landing gear 14, and nose landing gear 16 may each be retracted for flight.

Aircraft 10 may also include a primary brake system, which may be applied to any wheel of any landing gear. The primary brake system of aircraft 10 may comprise a collection of subsystems that produce output signals for controlling the braking force and/or torque applied at each wheel (e.g., wheel 13A, wheel 13B, wheel 15A, wheel 15B, wheel 17A, and/or wheel 17B). The primary brake system may communicate with the brakes of each landing gear (e.g., left main landing gear 12, right main landing gear 14, and/or nose landing gear 16), and each brake may be mounted to each wheel to apply and release braking force on one or more wheels (e.g., as described above).

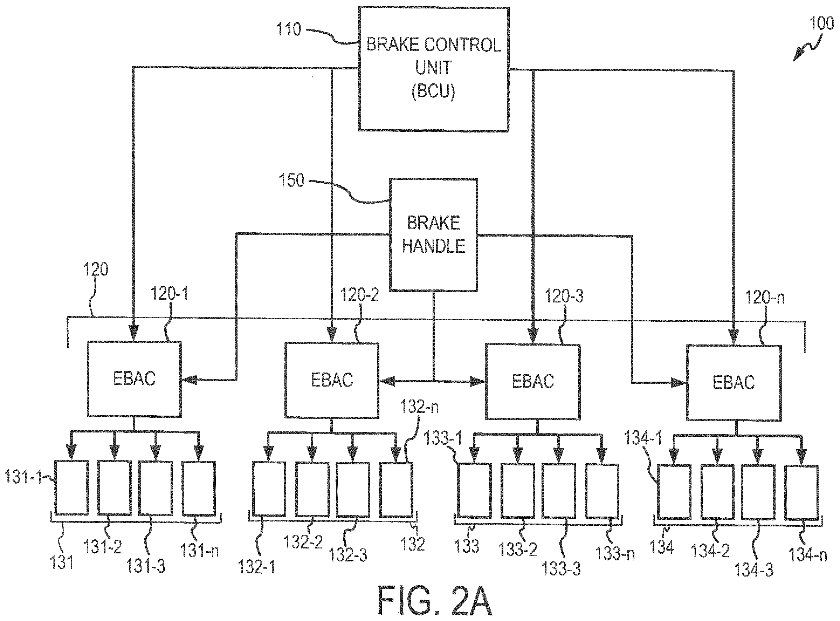

Referring now to FIGs. 1 and 2A, in accordance with various embodiments, aircraft 10 may comprise an emergency electric brake system 100. Emergency electric brake system 100 may be configured to provide a separate input to one or more EBACs to allow the EBACs to be commanded during an emergency braking event. In that respect, the separate input may bypass the brake control unit (BCU) to allow direct input to one or more EBACs, thus allowing a braking force to be applied to the brakes during emergency braking and/or to decelerate the aircraft. Various Federal Aviation Administration (FAA) guidelines and/or related safety requirements may dictate that various aircraft systems or components meet different Design Assurance Levels (DAL) based on the effect a failure condition in the system or component would have on the aircraft, crew, passengers, and/or the like. Systems or components having higher DALs typically have a greater associated expense and may need greater levels of maintenance and visibility to ensure proper functioning. Systems or components having lower DALs may have a lower associated expense and lower levels of maintenance in comparison. Enabling a separate input to one or more EBACs and bypassing the BCU during emergency braking may allow at least the BCU to have a lower DAL compared to BCUs in electric brake systems of the prior art.

In various embodiments, emergency electric brake system 100 may comprise a brake control unit (BCU) 110 configured to transmit braking commands to one or more electric braking actuating controllers (EBAC) 120. For example, BCU 110 may be in communication with a brake pedal and/or the like, and may thus generate and transmit the braking commands in accordance with pilot, copilot, and/or autonomous system braking commands. BCU 110 may include one or more processors and/or one or more tangible, non-transitory memories and be capable of implementing logic. Each processor can be a general purpose processor, a digital signal processor (DSP), an application specific integrated circuit (ASIC), a field programmable gate array (FPGA) or other programmable logic device, discrete gate or transistor logic, discrete hardware components, or any combination thereof. In various embodiments, BCU 110 may comprise a processor configured to implement various logical operations in response to execution of instructions, for example, instructions stored on a non-transitory, tangible, computer-readable medium.

In various embodiments, BCU 110 may be coupled to and/or in electronic communication with one or more EBACs 120. For example, BCU 110 may be coupled to and/or in electronic communication with a first EBAC 120-1, a second EBAC 120-2, a third EBAC 120-3, and/or an "Nth" EBAC 120-n. Each EBAC 120 may be configured to receive braking commands from BCU 110, process the braking command, and drive one or more electromechanical brake actuators (EBA) based on the braking command, as discussed further herein. In various embodiments, emergency electric brake system 100 may comprise any suitable number of EBAs in electronic communication with each EBAC 120. For example, first EBAC 120-1 may be in electronic communication with a first EBA 131-1, a second EBA 131-2, a third EBA 131-3, and/or an "Nth" EBA 131-n (collectively, EBAs 131); second EBAC 120-2 may be in electronic communication with a first EBA 132-1, a second EBA 132-2, a third EBA 132-3, and/or an "Nth" EBA 132-n (collectively, EBAs 132); third EBAC 120-3 may be in electronic communication with a first EBA 133-1, a second EBA 133-2, a third EBA 133-3, and/or an "Nth" EBA 133-n (collectively, EBAs 133); and/or Nth EBAC 120-n may be in electronic communication with a first EBA 134-1, a second EBA 134-2, a third EBA 134-3, and/or an "Nth" EBA 134-n (collectively, EBAs 134).

Each EBAC 120 may drive the corresponding EBAs 131, 132, 133, 134 by providing voltage to each EBA 131, 132, 133, 134 to apply braking force. For example, EBAC 120, via each EBA 131, 132, 133, 134, may alter the force applied to each brake, and thus braking force, in response to receiving the braking command from BCU 110. Each EBAC 120 may contain a computing device (e.g., a processor) and an associated memory. The associated memory may comprise an article of manufacture including a computer-readable medium having instructions stored thereon that, in response to being executed by a computing device (e.g., a processor), cause the computing device to perform various methods. The associated memory may contain executable code for converting the braking commands into a drive signal to drive each EBA 131, 132, 133, 134.

In various embodiments, emergency electric brake system 100 may further comprise a brake handle 150 configured to provide an independent braking input to each EBAC 120. Brake handle 150 may comprise an emergency handle, joystick, button, toggle, and/or the like configured to be operated by a pilot, copilot, and/or the like in response to an emergency condition. For example, and as discussed further herein, brake handle 150 may allow a pilot, copilot, and/or the like to provide an emergency brake command directly to each EBAC 120, thus bypassing BCU 110 (e.g., in the event of a failure in BCU 110). Brake handle 150 may be located in any suitable location within aircraft 10, such as, for example, in a cockpit 26 of aircraft 10. As discussed further herein, in response to displacement of brake handle 150, an emergency brake signal may be generated by one or more EBACs 120, causing each EBAC 120 to drive one or more EBAs 131, 132, 133, 134 to apply braking force.

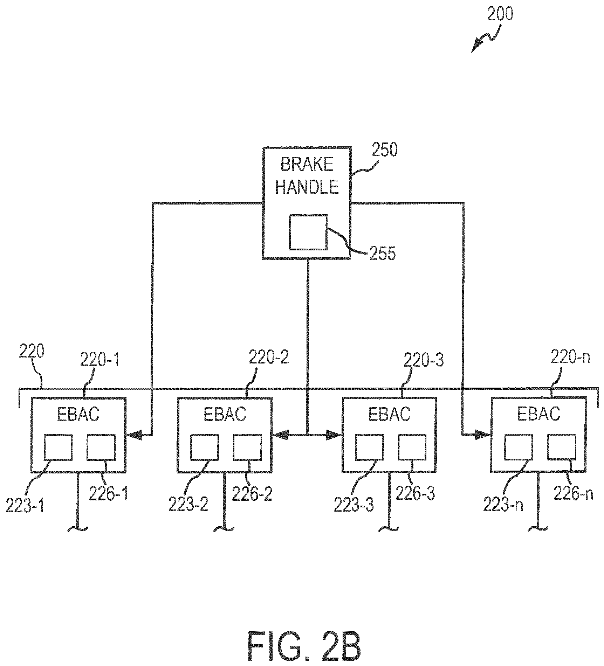

In various embodiments, and with reference to FIG. 2B, a brake handle 250 and/or one or more EBACs 220 in an emergency electric brake system 200 may each include one or more software and/or hardware components configured to aide in emergency braking. For example, brake handle 250 may comprise one or more displacement sensors 255. In various embodiments, brake handle 250 may comprise a plurality of displacement sensors 255 for redundancy, such as, for example, two, three, or four displacement sensors 255. Displacement sensor 255 may be coupled to and/or in operable communication with brake handle 250. Displacement sensor 255 may be configured to detect and measure a distance displaced by brake handle 250 (e.g., in response to a pilot, copilot, or the like displacing brake handle 250). Displacement sensor 255 may comprise any suitable sensor capable of detecting and measuring a displacement distance, such as, for example, a linear variable differential transformer (LVDT), a rotary variable differential transformer (RVDT), a potentiometer, a magnetic encoder, and/or any other suitable position sensor capable of measuring displacement or deflection. In response to detecting and measuring the displacement distance, displacement sensor 255 may generate a displacement distance data. For example, the displacement distance data may be representative of the distance brake handle 250 is displaced, either absolutely or as a percentage of displacement from a reference position to a maximum reference position, as measured by displacement sensor 255. Brake handle 250 may be configured to transmit the displacement distance data to each EBAC 220. In various embodiments, displacement sensor 255 may also be configured to directly transmit the displacement distance data to each EBAC 220.

In various embodiments, each EBAC 220 may comprise a conditioning module and/or a control module. For example, first EBAC 220-1 may comprise a first conditioning module 223-1 and/or a first control module 226-1; second EBAC 220-2 may comprise a second conditioning module 223-2 and/or a second control module 226-2; third EBAC 220-3 may comprise a third conditioning module 223-3 and/or a third control module 226-3; and/or Nth EBAC 220-n may comprise an "Nth" conditioning module 223-n and/or an "Nth" control module 226-n.

Each conditioning module 223-1, 223-2, 223-3, 223-n may be configured to receive the displacement distance data from brake handle 250 and/or displacement sensor 255, and generate an emergency brake signal based on the displacement distance data. For example, and in various embodiments, each conditioning module 223-1, 223-2, 223-3, 223-n may be configured to generate the emergency brake signal as a variable emergency brake signal or a single emergency brake signal. The variable emergency brake signal may be generated to allow for modulated and controlled braking force based on the displacement distance data. In that respect, the variable emergency brake signal may allow for conversion of the displacement distance data directly into a desired emergency brake force (e.g., greater displacement in brake handle 250 may correspond to greater brake force). For example, where a corresponding aircraft brake has a maximum force of, for example, 20,412 kg (45,000 lbs.) (e.g., each EBA applies a maximum braking force of 5,103 kg (11,250 lbs.)), a full (i.e., 100%) displacement of brake handle 250 may translate into the variable emergency brake signal of about 20,412 kg (45,000 lbs.); a half (i.e., 50%) displacement of brake handle 250 may translate into the variable emergency brake signal of about 10,206 kg (22,500 lbs.); a quarter (i.e., 25%) displacement of brake handle 250 may translate into the variable emergency brake signal of about 5,103 kg (11,250 lbs.); and/or the like (wherein about in this context refers only to +/- 227 kg (500 lbs.)). Although an example of a 20,412 kg (45,000 lbs.) brake is provided, it should be understood that the systems and methods herein apply to brakes having any force capabilities.

The single emergency brake signal may be generated by each conditioning module 223-1, 223-2, 223-3, 223-n to allow for a predetermined braking force based on the displacement distance data. For example, regardless of the displacement distance measured in brake handle 250 (e.g., 100%, 70%, etc.), conditioning modules 223-1, 223-2, 223-3, 223-n may generate the single emergency brake signal to command braking. The single emergency brake signal may comprise data and/or signals indicating a full brake force, a half brake force, and/or any other suitable predetermined force (dependent on brake force capabilities). Each conditioning module 223-1, 223-2, 223-3, 223-n may be configured to transmit the emergency brake signal to the corresponding control module 226-1, 226-2, 226-3, 226-n.

In response to receiving the emergency brake signal, control modules 226-1, 226-2, 226-3, 226-n may analyze the emergency brake signal to determine the specified brake force. Control modules 226-1, 226-2, 226-3, 226-n may drive one or more of the EBAs 131, 132, 133, 134 (with brief reference to FIG. 2A) to apply braking force. In various embodiments, each conditioning module 223-1, 223-2, 223-3, 223-n may further comprise braking logic, which may be referred to as a "voting scheme," for determining which brake signal to use in response to receiving an emergency brake signal from brake handle 250, or displacement sensor 255, and a braking command from BCU 110 (e.g., to determine the emergency brake signal and/or the braking command on which to base braking force, in response to receiving multiple brake signals). In various embodiments, the braking logic may be based on a hierarchy of the sources of brake signals. For example, emergency brake signals may be given priority over braking commands and/or other brake signals received from other sources (e.g., from BCU 110). In various embodiments, the braking logic may also include taking an average of the specified brake forces in response to receiving multiple brake signals; giving priority to the emergency brake signals and/or braking commands having the greatest specified brake force; comparing emergency brake signals and braking commands to determine the similarity of specified brake force (e.g., if one emergency brake signal and/or braking command is greater than 10% different than the other two emergency brake signals and/or braking commands and the other two emergency brake signals and/or braking commands are within 10% of each other, then an average of the two similar emergency brake signals and/or braking commands are used as the brake signal); and/or the like.

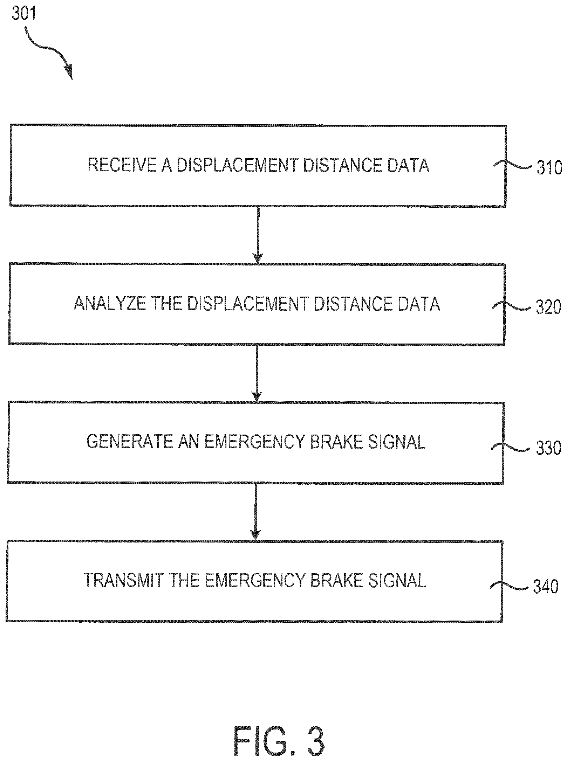

In various embodiments, and with reference to FIG. 3 and continued reference to FIGs. 2A and 2B, a method 301 of emergency electric braking is disclosed. Method 301 may comprise receiving a displacement distance data (Step 310). One or more EBACs 120 may be configured to receive the displacement distance data from brake handle 150. For example, conditioning modules 223-1, 223-2, 223-3, 223-n may be configured to receive the displacement distance data from displacement sensor 255 of brake handle 250. The displacement distance data may be based on a displacement of brake handle 250, and may comprise data indicating a measured displacement distance.

Method 301 may comprise analyzing the displacement distance data (Step 320). EBACs 120 may be configured to analyze the displacement distance data to determine the measured displacement. In various embodiments, conditioning modules 223-1, 223-2, 223-3, 223-n in each EBAC 220 may be configured to analyze the displacement distance data. Method 301 may comprise generating an emergency brake signal (Step 330). EBAC 120 may be configured to generate the emergency brake signal. In various embodiments, conditioning modules 223-1, 223-2, 223-3, 223-n in each EBAC 220 may be configured to generate the emergency brake signal. The emergency brake signal may be generated to comprise a specified brake force based on the displacement distance data. The emergency brake signal may be generated as a variable emergency brake signal or a single emergency brake signal, as discussed further herein. Method 301 may comprise transmitting the emergency brake signal (Step 340). EBAC 120 may be configured to transmit the emergency brake signal to one or more EBAs 131, 132, 133, 134. In various embodiments, control modules 226-1, 226-2, 226-3, 226-n of each respective EBAC 220 may be configured to transmit the emergency brake signal. In response to receiving the emergency brake signal, each EBA 131, 132, 133, 134 may actuate to apply braking force to one or more aircraft brakes.

As used herein, the term "non-transitory" is to be understood to remove only propagating transitory signals per se from the claim scope and does not relinquish rights to all standard computer-readable media that are not only propagating transitory signals per se.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures. The scope of the disclosures is accordingly to be limited by nothing other than the appended claims and their legal equivalents, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. An emergency electric brake system for an aircraft, comprising:
a brake handle (150) configured to generate a displacement distance data related to a displacement of the brake handle; and
an electric braking actuating controller, EBAC, (120) in direct electronic communication with the brake handle, wherein in response to receiving the displacement distance data from the brake handle, the EBAC is configured to generate an emergency brake signal comprising a specified brake force.

2. The emergency electric brake system of claim 1, further comprising an electromechanical brake actuator, EBA, (132) in electronic communication with the EBAC.

3. The emergency electric brake system of claim 2, wherein in response to receiving the emergency brake signal from the EBAC, the EBA is configured to apply a braking force in an aircraft brake based on the specified brake force.

4. The emergency electric brake system of claim 1, 2 or 3, wherein the brake handle comprises a displacement sensor (255) configured to detect and measure the displacement of the brake handle, and preferably wherein the displacement sensor comprises at least one of a linear variable differential transformer, LVDT, sensor or a rotary variable differential transformer, RVDT, sensor.

5. The emergency electric brake system of any preceding claim, wherein the emergency brake signal comprises a variable emergency brake signal or a single emergency brake signal.

6. The emergency electric brake system of any preceding claim, further comprising a brake control unit, BCU, (110) in electronic communication with the EBAC, wherein the BCU is configured to transmit a braking command to the EBAC; and preferably wherein the EBAC comprises a braking logic configured to determine a brake signal to use in response to receiving the displacement distance data and the braking command.

7. A method of emergency electric braking, comprising:
receiving, by an electric braking actuating controller, EBAC, a displacement distance data related to a displacement of a brake handle;
generating, by the EBAC, an emergency brake signal based on the displacement distance data; and
transmitting, by the EBAC, the emergency brake signal to control a braking force in an aircraft brake.

8. The method of emergency electric braking of claim 7, wherein the EBAC is configured to transmit the emergency brake signal to an electromechanical brake actuator, EBA, in electronic communication with EBAC.

9. The method of emergency electric braking of claim 8, wherein in response to receiving the emergency brake signal from the EBAC, the EBA is configured to apply the braking force in the aircraft brake.

10. The method of emergency electric braking of claim 7, wherein the brake handle comprises a displacement sensor configured to detect and measure the displacement of the brake handle; and preferably wherein the displacement sensor comprises at least one of a linear variable differential transformer, LVDT, sensor or a rotary variable differential transformer, RVDT, sensor.

11. The method of emergency electric braking of any of claims 7 to 10, further comprising applying the braking force to an aircraft wheel based on the emergency brake signal.

12. An emergency electric brake system, comprising:
an electric braking actuating controller, EBAC, (220) having a processor; and
a tangible, non-transitory memory configured to communicate with the processor, the tangible, non-transitory memory having instructions stored thereon that, in response to execution by the processor, cause the EBAC to perform operations comprising:
receiving, by the EBAC, a displacement distance data related to a displacement of a brake handle;
generating, by the EBAC, an emergency brake signal based on the displacement distance data; and
transmitting, by the EBAC, the emergency brake signal to control a braking force in an aircraft brake.

13. The emergency electric brake system of claim 12, wherein the EBAC is configured to transmit the emergency brake signal to an electromechanical brake actuator, EBA, in electronic communication with EBAC; and preferably wherein in response to receiving the emergency brake signal from the EBAC, the EBA is configured to apply the braking force in the aircraft brake.

14. The emergency electric brake system of claim 12 or 13, wherein the brake handle comprises a displacement sensor configured to detect and measure the displacement of the brake handle; and preferably wherein the displacement sensor comprises at least one of a linear variable differential transformer, LVDT, sensor or a rotary variable differential transformer, RVDT, sensor.

15. The emergency electric brake system of claim 12, 13 or 14, wherein the emergency brake signal comprises a variable emergency brake signal or a single emergency brake signal.
